# EUROPÄISCHE PATENTANMELDUNG

(11) **EP 0 876 990 A2**
(43) Veröffentlichungstag der Anmeldung: **11.11.1998**
(21) Anmeldenummer: 98250119.9
(22) Anmeldetag: 03.04.1998
(51) Int. Cl.: B66D 5/14

(54) **Notaus-Stoppbremse für Kräne**

(30) Priorität: 30.04.1997 DE 19719079
(71) Anmelder: MANNESMANN Aktiengesellschaft, 40213 Düsseldorf (DE)
(72) Erfinder: Schmitz, Werner, 47259 Duisburg (DE); Berlin, Frank, 47447 Moers (DE); Gohres, Hans-Werner, 47239 Duisburg (DE); Bornebusch, Karl-Erich, 40668 Meerbusch (DE); Asmus, Norbert, 47441 Moers (DE)
(74) Vertreter: Meissner, Peter E., Dipl.-Ing.

(57) **Zusammenfassung**

Die Erfindung betrifft eine Notaus-Stoppbremse für Krane, insbesondere zum Transport feuerflüssiger Massen, mit zwei einander gegenüberliegenden in Schwenklagern gelagerte Hebeln, mit einer zwischen in Backenlager gelagerten Bremsbacken vorgesehenen Bremsscheibe, mit einer am offenen Ende der Hebel angeordnete, die Bremskraft erzeugende Bremsfeder und mit einer an die Hebel angreifenden Bremslüfteinrichtung, wobei an der Bremsscheibe mindestens zwei symmetrisch über den Umfang verteilt angeordnete Notaus-Stoppbremsen vorgesehen sind. Dabei ist im mittleren Bereich der kurzen, steifen Hebel (2, 3) zwischen der als funktionsgerecht bemessenen Spiralfeder ausgebildeten Bremsfeder (1) und den groß bemessenen Lagern (16, 17) eine an beiden Hebeln (2, 3) angelenkte Kolben-Zylindereinheit als Lüfteinrichtung angeordnet.

## Beschreibung

Die Erfindung betrifft eine Notaus-Stoppbremse für Krane, insbesondere zum Transport feuerflüssiger Massen, gemäß dem Oberbegriff des Patentanspruches 1.

Die Anforderungen, die an eine Notaus-Stoppbremse an einer Seiltrommel gestellt werden müssen, insbesondere für den mit hohem Gefährdungspotential belasteten Transport feuerflüssiger Massen, ist dem Aufsatz von F. Matta und F. Berlin - 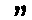 Untersuchung der Zuverlässigkeit von Notstopp-Bremseinrichtungen an Gießkranen - Teil I" in der Zeitschrift 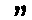 Fördern und Heben" 47 (1997) Nr. 3, S. 147 - 150 zu entnehmen. Bezogen auf die Einbausituation sind folgende Punkte zu berücksichtigen:
- große Backenlüftung von mehr als 1 mm (Ausgleich des Lagerspieles der Seiltrommel)
- Anpassung an die mögliche Schiefstellung der Bremsscheibe
- Aufnahme großer Bremsmomente
- kurze Einfallzeit von < 200 m sec.
- Vermeidung von Prellschlag
- Zuverlässigkeit des Systems in Erfüllung der Bereitschaftssituation
- Berücksichtigung der Einsatzbedingungen beim Transport feuerflüssiger Massen
- Reduzierung der Kraftnebenschlüsse

Eine Scheibenbremse für Industrieanlagen ist in der DE-OS 2817695 offenbart. Diese weist vier Bremshebel auf, mit vier an den Bremshebeln vorgesehenen Bremsbacken, mit einer zwischen den Bremshebeln bzw. den Bremsbacken vorgesehenen Bremsscheibe, mit mindestens einer die Bremskraft erzeugenden Bremsfeder und mit einer an die Bremshebel angreifenden Bremslüfteinrichtung. Die Bremslüfteinrichtung weist nur ein Lüftgerät, aber zwei Lüftmechanismen auf, wobei die beiden Lüftmechanismen über ein Gelenkparallelogramm miteinander verbunden sind und jeweils ein Lüftmechanismus zwischen zwei Bremshebeln wirksam ist. Vom kinematischen Ablauf her ist die bekannte Anordnung konstruktiv aufwendig und für die besonderen Anforderungen, die an eine Notaus-Stoppbremse gestellt werden müssen, nicht geeignet. Außerdem sind die übertragbaren Kräfte begrenzt.

Ausgehend von dieser bekannten Ausführung ist es Aufgabe der Erfindung eine Notaus-Stoppbremse anzugeben, die bei Backenlüftung von mehr als 1 mm große Kräfte übertragen kann und den Besonderheiten aufgrund Funktion und Einbausituation gerecht wird.

Diese Aufgabe wird ausgehend vom Oberbegriff des Patentanspruches 1 mit den im kennzeichnenden Teil angegebenen Merkmalen gelöst. Vorteilhafte Weiterbildungen sind Bestandteil von Unteransprüchen.

Zur Erfüllung der hohen Anforderungen an eine Notaus-Stoppbremse ist erfindungsgemäß diese in Kompaktbauweise konzipiert mit kurzen, steifen Hebeln, starker Spiralfeder und großen Lagern sowie einer Kolben-Zylindereinheit als Lüfteinrichtung. Diese ist im mittleren Bereich der Hebel, angelenkt an beide Hebel, zwischen Bremsfeder und Lager angeordnet.

Wie beim bekannten Stand der Technik weist die erfindungsgemäß ausgebildete Notaus-Stoppbremse keinen Festsattel auf, so daß durch die Beweglichkeit der beiden Hebel immer gleiche Kräfte auf die Bremsbacken wirksam werden. Es wird ein Kräfteparallelogramm gebildet, das auch eine Schiefstellung der Bremse in der Schwenkebene erlaubt. Durch einen vorgegebenen Backenlüftungsweg von mehr als 1 mm kann das axiale Spiel der großen Seiltrommeln ausgeglichen werden, ebenso der Schlag aufgrund von Lagerspiel und elastischer Nachgiebigkeit der Unterkonstruktion. Man denke hierbei beispielsweise an das Gewicht einer mit flüssigem Stahl gefüllten Pfanne von ca. 400 t und einer Seiltrommel von bis zu 3 Meter Durchmesser. Eine Schiefstellung der Bremsscheibe in der senkrecht zur Schwenkebene liegenden Ebene kann bei der Montage der Bremse berücksichtigt werden. Alternativ kann dies auch durch eine Kalottenlagerung der Bremsbacken ausgeglichen werden.

Im Sinne eines redundanten Systems ist eine solch erfindungsgemäß ausgebildete Notaus-Stoppbremse in besonderer Weise als Sicherheitsbremse geeignet, die bei Ausfall der üblichen Bremssysteme oder bei Bruch der kinematischen Kette einen Lastabsturz sicher verhindern soll. Aus diesem Grunde wird eine solche Notaus-Stoppbremse an der Seiltrommel des betreffenden Kranes d. h. am Ende der kinematischen Kette angeordnet. Das eigentliche Sicherheitsmittel ist ein an sich bekannter Federspeicher, der dann aktiviert wird, wenn die Elektrik oder die Hydraulik des Kransystems ausfällt. Die gespeicherte Federenergie wird schlagartig freigegeben und über entsprechende Hebel wird eine Normalkraft auf die Bremsbacken ausgeübt, die mit entsprechenden Bremsbelägen ausgestattet, die zwischen den Bremsbacken laufende Bremsscheibe zum Stehen bringt. Erfindungswesentlich dabei ist, daß durch die Wahl einer starken Bremsfeder, großer Lager und einer steifen Konstruktion hohe Bremsmomente aufgebracht werden können.

Vorgeschlagen werden zwei Ausführungsvarianten, von denen die erste eine liegende Ausführung ist. Bei dieser Ausführungsform werden die Kräfte der Feder unmittelbar über zwei kurze schwenkbare Hebel auf die angelenkt angeordneten Bremsbacken übertragen. Die zwischen Bremsfeder und Lager angeordnete Kolben-Zylindereinheit übernimmt zum einen die Funktion des Lüftgerätes und zum anderen eine Haltefunktion, um die Notaus-Stoppbremse in 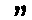 Offen-Position" zu halten. Darüber hinaus wirkt die Kolben-Zylindereinheit als Dämpfungsglied, um den sogenannten Prellschlag zu verhindern. Darunter versteht man ein kurzes Wiederöffnen der Bremse bei Betätigung. Dieser Prellschlag ist besonders dann zu erwarten, wenn die Konstruktion der Bremse sehr steif, die Masse groß und das System schwach bedämpft ist.

Bei der zweiten Ausführungsform handelt es sich um eine stehende Ausführung mit einer Momentenübertragung der gespeicherten Federenergie auf die Bremsbacken. Hebel und Bremsbacken sind über eine durchgehende Welle miteinander verbunden. Im Unterschied zur ersten Ausführungsform stützt sich die Feder nicht zwischen beiden Hebeln ab, sondern über eine Zugstange über die Außenseite eines Hebels. Die Verbindung zum anderen Hebel erfolgt über die Zugstange, die mit dem offenen Ende durch Bohrungen der beiden Hebel hindurchgreift. Bei dieser Ausführungsform verhindert die Torsion der Welle wie eine Drehstabfeder den Prellschlag.

Beide Ausführungsvarianten zeichnen sich durch gering bewegte Massen mit vernachlässigbaren Reibnebenschlüssen aus. Dies ermöglicht in Kombination mit der starken Bremsfeder Einfallzeiten von weniger als 200 m sec. Auch der seltene Fall eines Bruches der Welle der Seiltrommel kann damit sicher abgefangen werden. Die Anordnung einer entsprechenden Sensorik wird dabei vorausgesetzt.

Die ungünstigen Randbedingungen, insbesondere in einem Hüttenwerk, wie hohe Umgebungstemperaturen (bis zum Flammenschlag), große Schwankungsbreite der Umgebungstemperaturen, Schwingungen, elastische Verformungen der Unterkonstruktion, produktionsbedingte Emissionen von metall- und mineralhaltigen Stäuben müssen durch Auslegung der Dichtmittel und der Lager berücksichtigt werden.

Insgesamt lassen sich die Vorteile der erfindungsgemäß ausgebildeten Notaus-Stoppbremse mit folgenden Schlagworten zusammenfassen.
- prellschlagarme Bremse
- fehlertolerantes Bremssystem
- gedämpfter Kraftaufbau
- schleiffreier Betrieb
- massereduziertes Betätigungssystem
- anschlußreduziertes Betätigungssystem
- rückwirkungsfreie Einhaltung der Bremsebene

In der Zeichnung wird anhand der zwei zuvor genannten Ausführungsbeispiele die erfindungsgemäß ausgebildete Notaus-Stoppbremse näher erläutert. Es zeigen:
- Figur 1: eine Draufsicht einer ersten Ausführungsform einer erfindungsgemäß ausgebildeten Notaus-Stoppbremse
- Figur 2: eine Seitenansicht
- Figur 3: im vergrößerten Maßstab einen Schnitt in Richtung A-A in Fig. 1
- Figur 4: im vergrößerten Maßstab einen Schnitt in Richtung D-D in Fig. 1
- Figur 5: eine Vorderansicht mit teilweise Aufbruch einer zweiten Ausführungsform einer erfindungsgemäß ausgebildeten Notaus-Stoppbremse
- Figur 6: eine Seitenansicht

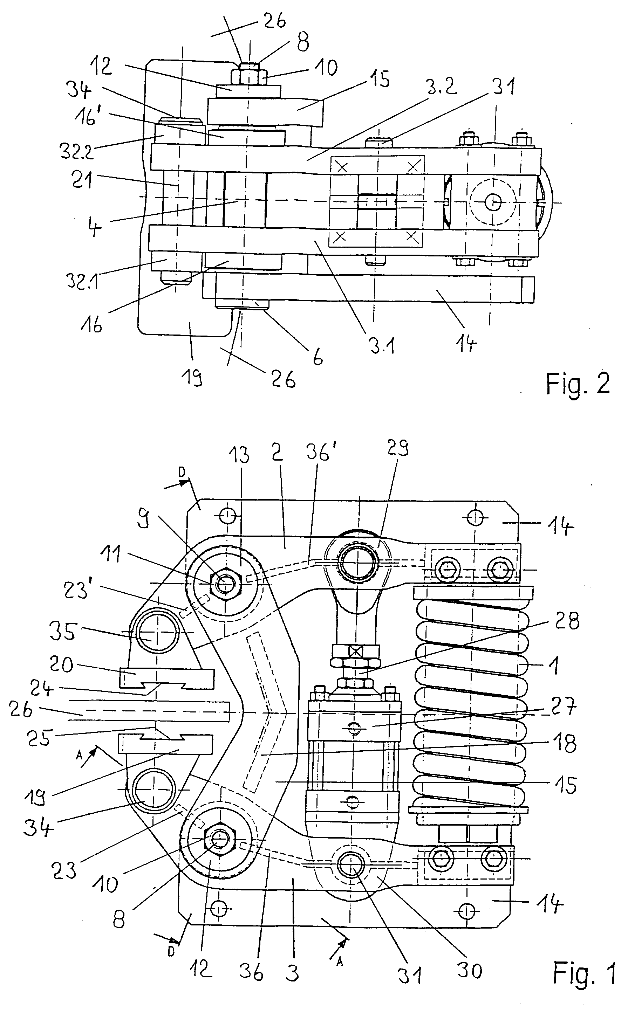

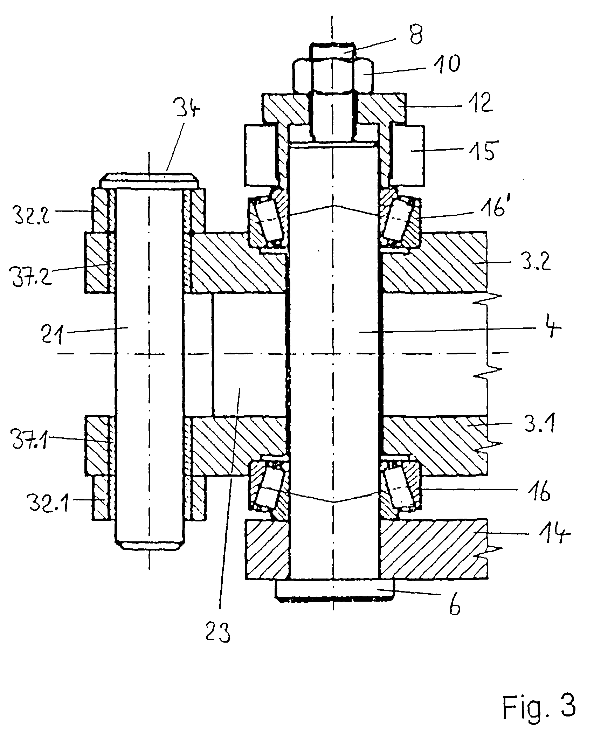

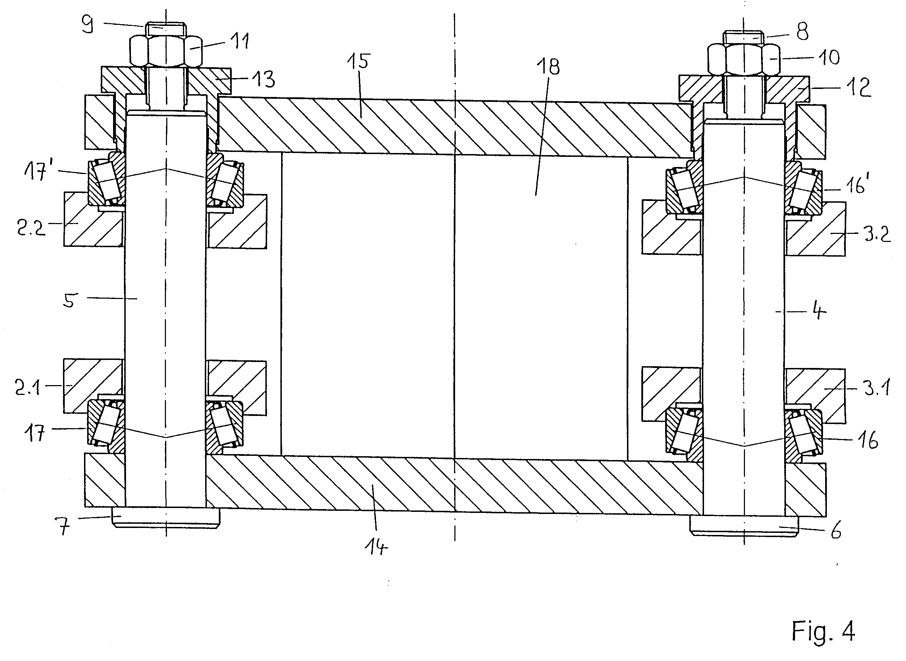

In den Figuren 1 und 2 ist in einer Draufsicht und in einer Seitenansicht eine erste Ausführungsform einer erfindungsgemäß ausgebildeten Notaus-Stoppbremse dargestellt. Die Hauptkomponenten sind der Federspeicher in Form einer Schraubenfeder 1, die zwischen zwei schwenkbar gelagerten Heben 2,3 eingespannt ist. Aus der Seitenansicht (Fig.2) bzw. Schnitt (Fig. 4) geht hervor, daß jeder Hebel 2,3 aus zwei parallel liegenden einen Abstand zueinander aufweisenden Laschen 2.1; 2.2 bzw. 3.1; 3.2 besteht. Die beiden Laschen 2.1; 2.2 bzw. 3.1; 3.2 sind jeweils über einen Bozen 4,5 miteinander verbunden. Der Bolzen 4,5 weist einen Kopf 6,7 und am Ende ein Gewindeabschnitt 8,9 auf. Die Befestigung erfolgt über eine Mutter 10,11, die auf einer Buchse 12,13 (Fig. 4) zur Anlage kommt. Zwischen dem Bodenblech 14 einerseits und dem Deckblech 15 andererseits und den Hebeln 2,3 sind Lager 16,16', 17,17' (Fig. 4) angeordnet. Diese ermöglichen ein Schwenken der Laschen 2.1, 2.2 bzw. 3.1, 3.2 um den feststehenden Bolzen 4, 5. Am Ende der Hebel 2,3 sind angelenkt Bremsbacken 19,20 angeordnet. Die Anlenkung erfolgt über einen Bolzen 21,22, der sich durch die jeweiligen Bremsbacken 19,20 und die Hebel 2,3 erstreckt. Einzelheiten dazu sind in Fig. 3 dargestellt. Die Anordnung des hier nicht dargestellten Bremsbelages ist in der schwalbenschwanzförmig ausgebildeten Ausnehmung 24,25 in der jeweiligen Bremsbacke 19,20 möglich. Zwischen den Bremsbacken 19,20 verläuft der Außenbereich der im Notfall festzustellenden Bremsscheibe 26. Zwischen der Bremsfeder 1 und den Lagern 16, 17 ist angelenkt an beide Hebel 2,3 eine Kolben-Zylindereinheit angeordnet. Diese besteht aus einem Zylinder 27 und einem darin hier nicht sichtbar angeordneten doppeltwirkenden Kolben. Die nach außen geführte Kolbenstange 28 ist am Ende mit einem Auge 29 zur Anlenkung an den Hebel 2 versehen. Das freie Ende des Zyinders 27 weist ebenfalls ein Auge 30 auf, durch das sich ein Bolzen 31 erstreckt. Die Hebel 2,3 sind im Sinne einer großen Steifigkeit entsprechend ausgebildet. Dies gilt insbesondere für die Querschnittsverbreiterung im Bereich der Lager 16, 17. Außerdem ist im Bereich der Anlenklager für die Kolben-Zylindereinheit zwischen den Laschen 2.1, 2.2 bzw. 3.1, 3.2 ein Stegblech 36, 36' hochkantstehend angeordnet.

In Figur 3 ist in einem vergrößerten Maßstab der Schnitt in Richtung A-A in Fig. 1 dargestellt. In dieser Darstellung wird erkennbar, daß an den jeweiligen Bremsbacken 19, 20 (Fig. 1) je zwei im Abstand voneinander angeordnete Laschen 32.1, 32.2 bzw. 33.1, 33.2 befestigt sind.( Die mit 33.n bzw.38.n bezeichneten Teile sind in den Figuren nicht dargestellt. Diese Teile entsprechen den Teilen, die mit 32.n bzw. 37.n für den Bolzen 21 benannt sind und gehören zum Bolzen 22, dessen Kopf in Figur 1 mit 35 angedeutet ist.) Die jeweilige Lasche 32.1, 32.2 bzw. 33.1, 33.2 weist eine Bohrung auf, durch die der entsprechende Bolzen 21, 22 hindurchgreift. Der Bolzen 21, 22 ist mit einem Kopf 34, 35 versehen, der auf der oben liegenden Lasche 32.2 bzw. 33.2 zur Anlage kommt. Um ein Fressen zwischen Bolzen 21, 22 und den Laschen 32.1, 32.2, 33.1, 33.2 der Bremsbacken 19, 20 und den Laschen 2.1, 2.2, 3.1, 3.2 der Hebel 2, 3 der Bremseinrichtung zu verhindern, wird der Bolzen 20, 21 im Kontaktbereich von einer Führungsbuchse 37.1, 37.2, 38.1, 38.2 umfaßt, die gleichzeitig auch als Lager dient. Obwohl der Hebelarm zwischen dem Lager 16, 16' und dem Bolzen 21, 22 kurz ist, ist zur Versteifung zwischen den Laschen 2.1, 2.2 bzw. 3.1, 3.2 ein Stegblech 23, 23' hochkantstehend angeordnet.

Fig. 4 zeigt in einem vergrößerten Maßstab einen Schnitt in Richtung D-D in Fig. 1. Diese Darstellung zeigt insbesondere die Ausgestaltung der Lager 16, 16', 17, 17', die in diesem Ausführungsbeispiel als Kegelrollenlager ausgebildet sind. Es könnte aber ebensogut auch ein Gleitlager sein. Mittels der Buchsen 12, 13 und der Muttern 10, 11 können die beiden Lager 16, 16' bzw. 17, 17' gegeneinander verspannt werden. Im Sinne einer Versteifung der Bremseinrichtung ist zwischen dem Bodenblech 14 und dem Deckblech 15 ein Winkelblech 18 angeordnet. Damit soll insbesondere eine Durchbiegung des Deckbleches 15 verhindert werden, das nur als abgewinkelte Lasche ausgebildet ist, um, wie in Figur 1 zu erkennen, eine freie Zugänglichkeit von oben zur Kolben-Zylindereinheit und zur Bremsfeder 1 zu ermöglichen.

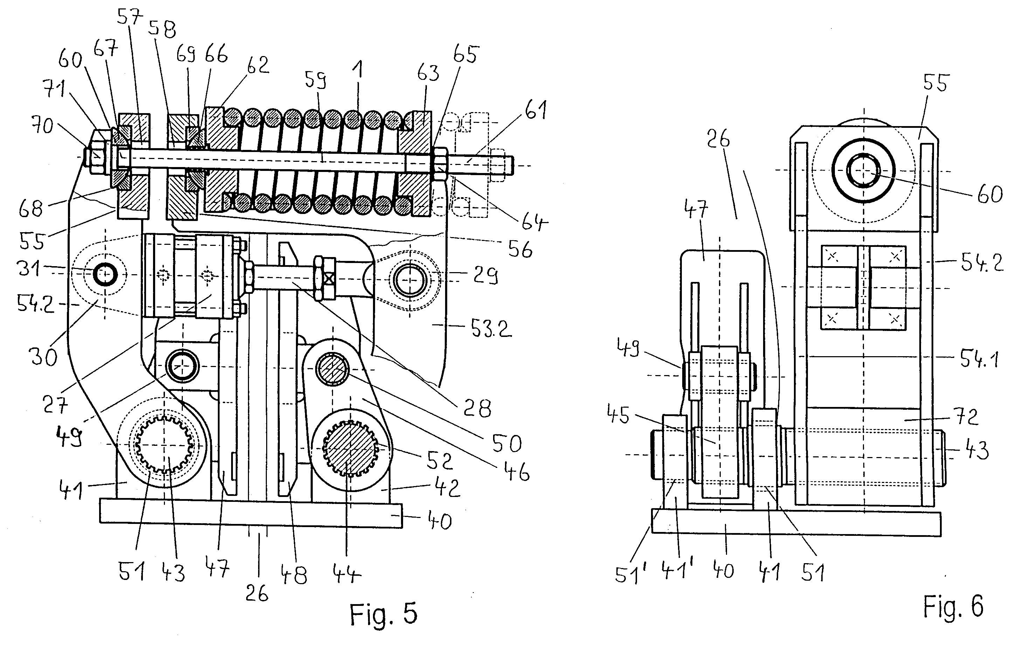

Figur 5 und 6 zeigt eine zweite Ausführungsform einer erfindungsgemäß ausgebildeten Notaus-Stoppbremse, wobei für gleiche Teile gleiche Bezugszeichen verwendet worden sind. Bei dieser stehenden Ausführungsform sind auf einer ebenen Trägerplatte 40 zwei im Abstand voneinander liegende Stützböcke 41,41' bzw. 42,42' angeordnet. Durch das jeweilige Stützbockpaar 41,41' bzw. 42,42' erstreckt sich eine Welle 43, 44, die fest mit einem kurzen Bremshebel 45,46 verbunden ist. An diesem Bremshebel 45,46 ist angelenkt eine Bremsbacke 47,48 befestigt. Die Anordnung des üblichen Bremsbelages auf der Stirnfläche der jeweiligen Bremsbacke 47,48 wurde hier weggelassen. Zwischen beiden Bremsbacken 47,48 ist die im Notfall abzubremsende Bremsscheibe 26 angeordnet. Die Anlenkung der Bremsbacke 47,48 am jeweiligen Bremshebel 45,46 erfolgt über eine durch den Bremshebel 45,46 sich erstreckenden Bolzen 49,50. Im Sinne der Momentenübertragung erstreckt sich die das Backenlager 51,51' bzw. 52,52' bildende Welle 43,44 durch die Stützbockpaare 41,41' bzw. 42,42' und ist fest mit den Hebeln 53.1, 53.2, 54.1, 54.2 verbunden. Im Unterschied zur ersten Ausführungsform gemäß den Figuren 1 bis 4 sind die Hebel 53,54 hier unterschiedlich ausgebildet. Jeder Hebel 53, 54 besteht aus einem Paar parallel liegender Laschen 53.1, 53.2 bzw. 54.1, 54.2, die über eine Hülse 72, 73 miteinander verbunden sind. Der in Figur 5 links angeordnete Hebel 54 erstreckt sich vom Lager aus nahezu gradlinig nach oben, während der rechts liegende Hebel 53 rechtwinklig abgewinkelt ist. Am oberen Ende sind beide Hebel 53,54 mit je einer Platte 55,56 versehen. Durch Bohrungen 57,58 in den Platten 55,56 erstreckt sich eine Stange 59, die an beiden Enden mit je einem Gewindeabschnitt 60,61 versehen ist. Auf dem hier rechts liegenden langen Abschnitt der Stange 59 sind zwei Anschlagstücke 62,63 angeordnet, zwischen denen die Bremsfeder 1 spannbar ist. Die mit gestrichelten Linien dargestellte Position am rechten Ende zeigt die Einbaustellung vor dem Verspannen der Bremsfeder 1. Das Spannen erfolgt mittels einer Mutter 64, die auf einer Unterlegscheibe 65 zur Anlage kommt. Für die Positionierung der Stange 59 in den Platten 55,56 der beiden Hebel 53,54 sind auf der Stange 59 zwei Kalottenkörper 66,67 angeordnet, die sich auf den in den Platten 55,56 eingelassenen Einsätzen 68,69 abstützen. Auf dem hier links liegenden Ende der Stange 59 ist zur Einstellung der Gegenhaltekraft ebenfalls eine Mutter 70 angeordnet, die auf einer Unterlegscheibe 71 zur Anlage kommt.

Im Unterschied zur ersten Ausführungsform wird bei dieser Ausführungsform in der 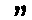 Offen-Position" die Kolben-Zylindereinheit auf Druck beansprucht. In der Notfallsituation drückt die Bremsfeder 1 die Kolbenstange 28 und damit den Kolben in den Zylinder 27 und die beiden sich verschwenkenden Hebel 53,54 verschwenken über die Welle 43,44 die beiden kurzen Bremshebel 45,46 mit und drücken die Bremsbacken 47,48 gegen die Bremsscheibe 26.

## Patentansprüche

1. Notaus-Stoppbremse für Krane, insbesondere zum Transport feuerflüssiger Massen, mit zwei einander gegenüberliegenden in Schwenklagern gelagerte Heben, mit einer zwischen in Backenlager gelagerten Bremsbacken vorgesehenen Bremsscheibe, mit einer am offenen Ende der Hebel angeordnete, die Bremskraft erzeugende Bremsfeder und mit einer an die Hebel angreifenden Bremslüfteinrichtung, wobei an der Bremsscheibe mindestens zwei symmetrisch über den Umfang verteilt angeordnete Notaus-Stoppbremsen vorgesehen sind,
dadurch gekennzeichnet,
daß im mittleren Bereich der kurzen, steifen Hebel (2, 3) zwischen der als funktionsgerecht bemessenen Spiralfeder ausgebildeten Bremsfeder (1) und den groß bemessenen Lagern (16, 17) eine an beiden Hebeln (2, 3) angelenkte Kolben-Zylindereinheit als Lüfteinrichtung angeordnet ist.

2. Notaus-Stoppbremse nach Anspruch 1
dadurch gekennzeichnet,
daß die Bremseinrichtung liegend angeordnet ist und die Bremsbacken (19, 20) an im Bremsscheibenbereich liegenden Ende der als Bremshebel ausgebildeten Hebel (2, 3) angeordnet sind und die Lager (16, 17) zwischen den Backenlagern (34, 35) und den Anlenklagern für die Kolben-Zylindereinheit sich befinden, wobei der Abstand zwischen Backenlager (34, 35) und den Lagern (16, 17) signifikant geringer ist als der zwischen den Lagern (16, 17) und Mittelachse Bremsfeder (1).

3. Notaus-Stoppbremse nach Anspruch 2,
dadurch gekennzeichnet,
daß das Verhältnis der Abstände mindestens 1:3 beträgt.

4. Notaus-Stoppbremse nach Anspruch 2 oder 3,
dadurch gekennzeichnet,
daß die Hebel (2, 3) im Bereich der Lager (16, 17) eine in der Längsebene liegende größere Erstreckung aufweisen als die daran anschließenden Bereiche.

5. Notaus-Stoppbremse nach einem der Ansprüche 2 bis 4,
dadurch gekennzeichnet,
daß zur Versteifung der Bremseinrichtung zwischen einander gegenüberliegenden Laschen (2.1, 2.2 bzw. 3.1, 3.2) der Hebel (2, 3) einerseits und zwischen einem Bodenblech (14) und einem Deckblech (15) andererseits Stegbleche (23, 23', 36, 36') bzw. ein Winkelblech (18) hochkantstehend angeordnet sind.

6. Notaus-Stoppbremse nach einem der Ansprüche 2 bis 5,
dadurch gekennzeichnet,
daß in der Längsebene der jeweilige Hebel (2, 3) zwischen Lager (16, 17) und Anlenklager eine in Richtung der Bremsscheibe (26) liegende Abwinkelung aufweist.

7. Notaus-Stoppbremse nach Anspruch 6,
dadurch gekennzeichnet,
daß die Abwinkelung mehr als 30° beträgt.

8. Notaus-Stoppbremse nach Anspruch 1,
dadurch gekennzeichnet,
daß die Bremseinrichtung stehend angeordnet ist und Bremsbacken (47, 48) einschließlich Backenlager (51, 51', 52, 52') einerseits und Hebel (53, 54) einschließlich Bremsfeder (1) und Kolben-Zylindereinheit andererseits parallel nebeneinander auf einer ebenen Trägerplatte (40) angeordnet sind und durch eine durch das jeweilige Backenlager (51, 52) und Lager sich erstreckende schwenkbare Welle (43, 44) in Wirkverbindung miteinander stehen.

9. Notaus-Stoppbremse nach Anspruch 8,
dadurch gekennzeichnet,
daß auf der ebenen Trägerplatte (40) je Backenlager (51, 52) zwei parallel im Abstand von einander liegende Stützböcke (41, 41', 42, 42') befestigt sind, zwischen denen ein kurzer Bremshebel (45, 46) angeordnet ist, an dessen einem Ende angelenkt die Bremsbacke (47, 48) befestigt ist und dessen anderes Ende mit der durch ihn sich erstreckenden Welle (43, 44) fest verbunden ist und die über die Stützböcke (41, 42) hinaus sich erstreckende Welle (43, 44) mit dem offenen Ende der Hebel (53, 54) fest verbunden ist.

10. Notaus-Stoppbremse nach Anspruch 8 oder 9,
dadurch gekennzeichnet,
daß ein Hebel (54) vom Lager aus nahezu gradlinig nach oben sich erstreckt und der andere Hebel (53) eine rechtwinklig auf den anderen Hebel (54) zugehende Abwinkelung aufweist und die Bremsfeder (1) am abgewinkelten Hebel (53) angeordnet ist.

11. Notaus-Stoppbremse nach Anspruch 10,
dadurch gekennzeichnet,
daß beide Hebel (53, 54) am offenen Ende plattenartig (55, 56) ausgebildet sind und durch eine in beiden Platten (55, 56) angeordnete Bohrung (57, 58) eine Stange (59) sich erstreckt, auf der Anschlagstücke (62, 63) zur Aufnahme der Bremsfeder (1) angeordnet sind.

12. Notaus-Stoppbremse nach Anspruch 11,
dadurch gekennzeichnet,
daß beide Enden der Stange (59) mit je einem Gewindeabschnitt (60, 61) zur Aufnahme einer Mutter (64, 70) versehen sind.

13. Notaus-Stoppbremse nach Anspruch 10 oder 11,
dadurch gekennzeichnet,
daß die Abstützung der Stange (59) im plattenartigen Endbereich der Hebel (53, 54) durch je einen Kalottenkörper (66, 67) erfolgt.
